# EUROPEAN PATENT APPLICATION

(11) **EP 1 734 340 A1**
(43) Date of publication of application: **20.12.2006**
(21) Application number: 05709872.5
(22) Date of filing: 08.02.2005
(51) Int. Cl.: G01C 21/26, G08G 1/09, G08G 1/0969, G08G 1/137, H04B 7/26, H04Q 7/34

(54) **NAVIGATION DEVICE**

(30) Priority: 10.02.2004 JP 2004033813
(71) Applicant: MATSUSHITA ELECTRIC INDUSTRIAL CO., LTD., Osaka 571-8501 (JP)
(72) Inventor: NOMURA, Kimihiro c/o Matsushita Elec.Indust.Co,Ltd, Chuo-ku,Osaka-shi,Osaka 540-6319 (JP); TATAMI,Shigeru c/o Matsushita Elec.Indust.Co,Ltd, Chuo-ku,Osaka-shi,Osaka 540-6319 (JP); KOBAYASHI,Akikazu c/o Matsushita Elec.Indust.CoLtd, Chuo-ku,Osaka-shi,Osaka 540-6319 (JP); Hatakeyama,Taketoshi c/oMatsushita Elec.Industr., Chuo-ku,Osaka-shi,Osaka 540-6319 (JP)
(74) Representative: Pautex Schneider, Nicole Véronique
(86) International application number: PCT/JP2005/001820
(87) International publication number: WO 2005/075941

(57) **Abstract**

When the position of other vehicle is acquired by conducting communications with the other vehicle, the user is enabled to easily recognize the target other vehicle even if the other vehicle and a plurality of general vehicles mix. A navigation apparatus includes an input section 11 for inputting a other vehicle search condition, a current position acquisition section 12 for acquiring the current position of the own vehicle, a storage section 13 for storing the input search condition and the current position information of the own vehicle, a transmission section 14 for transmitting an information transmission request from own apparatus A to other apparatus B, a reception section 15 for receiving vehicle feature information and current position information of the other vehicle B from the other apparatus B, a control section 16 for determining whether or not a other vehicle exists based on the other vehicle search condition set in the input section 11, the current position information of the own vehicle acquired in the current position acquisition section 12, and the vehicle feature information and current position information of the other vehicle received in the reception section 15, and a display section 17, when it is determined that the other vehicle exists, for displaying the vehicle feature information of the vehicle.

## Description

### Technical Field

This invention relates to a navigation apparatus for acquiring the position of a other vehicle by conducting communications with the other vehicle.

### Background Art

Hitherto, to tour with a plurality of vehicles with fellows, a navigation apparatus for enabling the position of other vehicle to be displayed in the own vehicle installing the navigation apparatus by conducting communications between the own vehicle and the other vehicle has been known (for example, refer to patent document 1). This navigation apparatus is made up of a navigation unit for computing the run position data of the own vehicle, a ground communication section for transmitting the run position data computed by the navigation unit to other vehicle, a display for displaying the positions of the own vehicle and the other vehicle together based on the run position data of the own vehicle computed by the navigation unit and the run position data of the other vehicle, and a message input section for transmitting message data to the other vehicle through the ground communication section. The ground communication section has a function of transmitting ID code combined with the run position data and the message data. The navigation unit determines which vehicle the message is from based on the ID code and displays the message in the proximity of the display position of the corresponding vehicle on the display.
Patent document 1: JP-A-8-68650

### Disclosure of the Invention

### Problems to be Solved by the Invention

However, the navigation apparatus in the related art described above enables the user to recognize the current position of the other vehicle on the display, but information to recognize the position of the other vehicle on the actual road is only the position information of the other vehicle and therefore if a plurality of vehicles run in the location, it is not easy for the user to recognize which vehicle is the corresponding other vehicle; this is a problem.

The invention is intended for solving such a related art problem and it is an object of the invention to provide a navigation apparatus for enabling the user to easily recognize a specific other vehicle.

### Means For Solving the Problems

To accomplish the above-described object, according to the invention, there is provided a navigation apparatus including an input unit that inputs an other vehicle search condition, a current position acquisition unit that acquires a current position of own vehicle, a reception unit that receives vehicle feature information and current position information transmitted from the other vehicle, a control unit that performs other vehicle determination as to whether a search target other vehicle exists or not based on the other vehicle search condition set in the input unit, the current position information of the own vehicle acquired in the current position acquisition unit, and the current position information of the other vehicle received in the reception unit, and a display unit that displays the vehicle feature information of the other vehicle when it is determined that the search target other vehicle exists in the other vehicle determination.

According to the configuration, the vehicle feature information is received in addition to the current position information from the other vehicle and thus not only the current position of the other vehicle, but also the information indicating how the other vehicle seems to be can be acquired and if the target other vehicle and a plurality of general vehicles mix at the same point, the user can easily find out the target other vehicle from among them.

The navigation apparatus of the invention is characterized in that the other vehicle search condition is the other vehicle existing within a predetermined distance range from the current position of the own vehicle. According to the configuration, searching for the target other vehicle is limited within the predetermined range from the own vehicle position, so that the other vehicle search processing can be performed with a small computation amount.

According to the invention, there is provided a navigation apparatus including a route search unit that searches for a route to a destination, a current position acquisition unit that acquires a current position of own vehicle, a reception unit that receives vehicle feature information, current position information, and search route information transmitted from other vehicle, a control unit that performs other vehicle determination as to whether other vehicle running on the same route as the own vehicle exists or not based on the search route information of the own vehicle searched in the route search unit, the current position information of the own vehicle acquired in the current position acquisition unit, and the search route information and the current position information of the other vehicle received in the reception unit, and a display unit that displays the vehicle feature information of the other vehicle when it is determined that the other vehicle running on the same route as the own vehicle exists in the other vehicle determination.

According to the configuration, the vehicle feature information and the search route information are received in addition to the current position information from the other vehicle and thus not only the current position of the other vehicle, but also the information indicating how the other vehicle seems to be and what route the vehicle passes through can be acquired and the user can easily find out the target other vehicle.

The navigation apparatus of the invention is characterized in that the control unit searches for the other vehicle existing within a predetermined distance range from the current position of the own vehicle in the other vehicle determination. According to the configuration, searching for the target other vehicle is limited within the predetermined range from the own vehicle position, so that the other vehicle search processing can be performed with a small computation amount.

The navigation apparatus of the invention is characterized in that when it is determined that the other vehicle running on the same route as the own vehicle exists in the other vehicle determination, the control unit calculates the distance between the other vehicle and the own vehicle and displays the distance on the display unit. According to the configuration, if other vehicles running on the same route as the own vehicle exist, the distance to the other vehicle is calculated and the distance is displayed together with the vehicle feature information of the vehicle, thus enabling the user to easily find out the target other vehicle. If a plurality of other vehicles exist, the distance to each of the other vehicles can be grasped, so that the top and last other vehicles can be found out.

The navigation apparatus of the invention is characterized in that when it is determined that the other vehicle running on the same route as the own vehicle exists in the other vehicle determination, the control unit determines whether the other vehicle has the same search route information as the own vehicle or not. When the control unit determines that the other vehicle has the same search route information, the control unit recognizes the other vehicle as a target vehicle. According to the configuration, the other vehicle running on the same route as the own vehicle contains the same search route information as the own vehicle is determined, so that the target vehicle can be found out easily. If a plurality of target vehicles exist, a comparison is made between the distance to one target vehicle and that to another, whereby the target vehicle nearest to the own vehicle can be detected.

The navigation apparatus of the invention is characterized in that when the control unit determines that the other vehicle does not have the same search route information as the own vehicle, the control unit stores the distance to the other vehicle and calculates how many other vehicles exist between the own vehicle and the target vehicle for display. According to the configuration, the number of vehicles ahead of the own vehicle to the target vehicle can be recognized easily.

The navigation apparatus of the invention is characterized in that the vehicle feature information includes at least one of vehicle color, vehicle model, vehicle size, model year, and exterior part. According to the configuration, the features of the other vehicle can be identified easily.

### Advantages of the Invention

The invention has the advantages that the vehicle feature information is received in addition to the current position information from the other vehicle and thus not only the current position of the other vehicle, but also the information indicating how the other vehicle seems to be can be acquired and if the target other vehicle and a plurality of general vehicles mix at the same point, the user can easily find out the target other vehicle from among them.

### Brief Description of the Drawings

FIG. 1 is a block diagram to show the configuration of navigation apparatus according to a first embodiment of the invention.
FIG. 2 is a flowchart to show the operation of the navigation apparatus according to the first embodiment of the invention.
FIG. 3 is a block diagram to show the configuration of navigation apparatus according to second and third embodiments of the invention.
FIG. 4 is a flowchart to show the operation of the navigation apparatus according to the second embodiment of the invention.
FIG. 5 is a flowchart to show the operation of the navigation apparatus according to the third embodiment of the invention.

### Description of Reference Numerals

- A: Own vehicle navigation apparatus (own apparatus)
- B: Other vehicle navigation apparatus (other apparatus)
- 11: Input section
- 12: Current position acquisition section
- 13: Storage section
- 14: Transmission section
- 15: Reception section
- 16: Control section
- 17: Display section
- 21: Input section
- 22: Current position acquisition section
- 23: Map data acquisition section
- 24: Route search section
- 25: Storage section
- 26: Transmission section
- 27: Reception section
- 28: Control section
- 29: Display section

### Best Mode for Carrying out the Invention

Embodiments of the invention will be discussed with the accompanying drawings.

### (First embodiment)

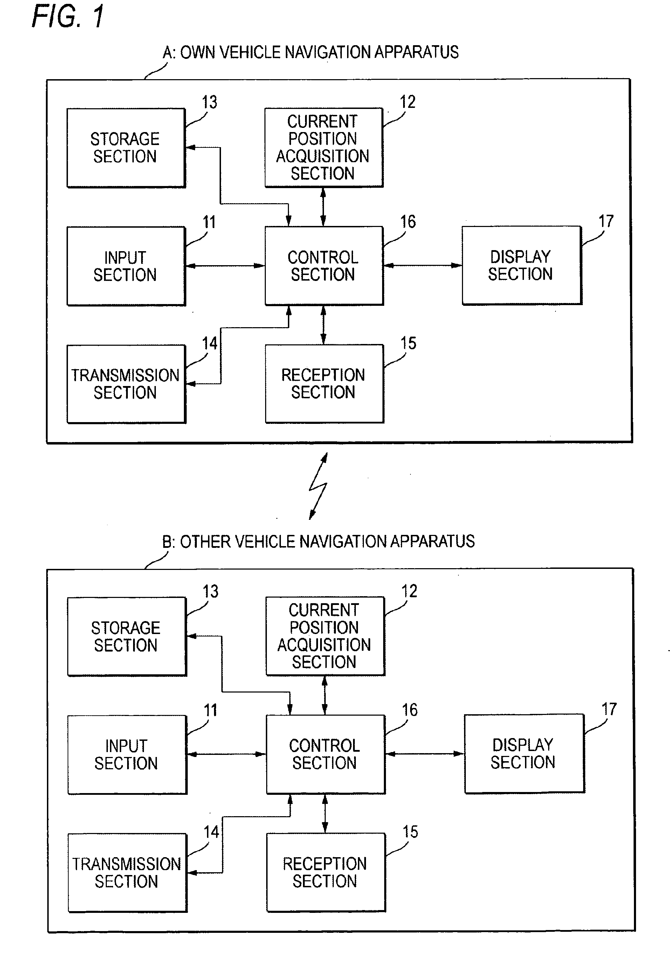

FIG. 1 shows the configuration of a navigation system in a first embodiment of the invention. In FIG. 1, the navigation system is made up of a own vehicle navigation apparatus A (which will be hereinafter referred to as the own apparatus A) and other vehicle navigation apparatus B (which will be hereinafter referred to as the other apparatus B); they have the same configuration. The own apparatus A and the other apparatus B include each an input section 11 for inputting other vehicle search condition and vehicle feature information of the own vehicle, a storage section 13 for storing the input search condition and vehicle feature information or received vehicle feature information and current position information, a transmission section 14 for transmitting an information transmission request from the own apparatus A to the other apparatus B or transmitting vehicle feature information and current position information from the other apparatus B to the own apparatus A, a current position acquisition section 12 for acquiring the current position of the own vehicle, a reception section 15 for receiving an information transmission request from the own apparatus A or receiving vehicle feature information and current position information from the other apparatus B, a control section 16 for making other vehicle determination based on the other vehicle search condition set in the input section 11, the current position information of the own vehicle acquired in the current position acquisition section 12, and the vehicle feature information and current position information of the other vehicle received in the reception section 15, and a display section 17, if it is determined that the fitted other vehicle exists in the other vehicle determination, for displaying the vehicle feature information of the fitted other vehicle.

The current position acquisition section 12 acquires the current position of the own vehicle using both autonomous navigation based on data from an azimuth sensor and a speed sensor and radio navigation for receiving a radio wave from a GPS satellite and computing the position. The vehicle feature information is the vehicle color, the vehicle model, the vehicle size, the model year, and the exterior parts of a carrier, a spoiler, etc. The control section 16 is a microprocessor and controls the sections in accordance with a program. The display section 17 is a liquid crystal display.

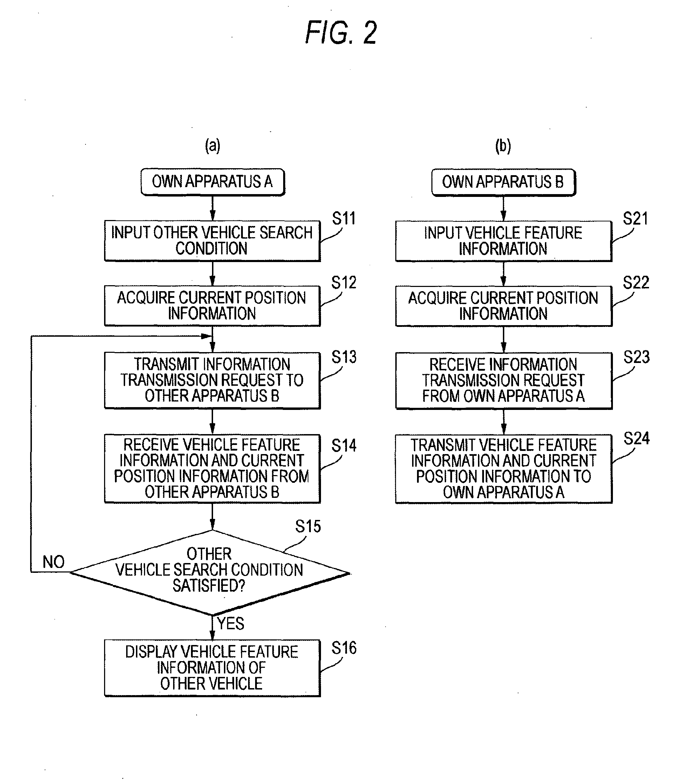

The operation of the described navigation system will be discussed with reference to a flowchart of the own apparatus A of FIG. 2 (a) and a flowchart of the other apparatus B of FIG. 2 (b). Here, the case where the own vehicle installing the own apparatus A searches for the other vehicle installing the other apparatus B will be discussed by way of example. First, in the other apparatus B, the vehicle feature information of the vehicle color, the shape, the vehicle model, etc., of the own vehicle is previously input from the input section 11, and the input vehicle feature information is stored in the storage section 13 (step S21). If the other vehicle starts to run, the current position information is acquired successively by the current position acquisition section 12 and is stored in the storage section 13 (step S22). On the other hand, in the own apparatus A, an other vehicle other vehicle search condition (for example, within a radius of 500 meters from the own vehicle position) is input through the input section 11 and is stored in the storage section 13 (step S11). If the own vehicle starts to run, the current position information is acquired successively by the current position acquisition 14 and is stored in the storage section 13 (step S12). When the search condition is stored in the storage section 13, the transmission section 14 of the own apparatus A transmits an information transmission request to the other apparatus B (step S13). Upon reception of the information transmission request in the other apparatus B (step S23), the transmission section 14 transmits the vehicle feature information and the current position information stored in the storage section 13 to the own apparatus A (step S24). When the reception section 15 of the own apparatus A receives the vehicle feature information and the current position information from the other apparatus B (step S14), the control section 16 determines whether or not the current position information of the other vehicle satisfies the search condition from the other vehicle search condition and the current position information of the own apparatus A stored in the storage section 13 and the current position information of the other apparatus B received in the reception section 15 (step S15). For example, if the other vehicle search condition is a condition of within 500 meters from the own vehicle position, it is determined that the other vehicle exists if the other vehicle is within the range of a radius of 500 meters from the own vehicle position based on the current position information of the other vehicle and the current position information of the own vehicle. If it is determined that the other vehicle exists as the result of the determination, the vehicle feature information of the other vehicle is displayed on the display section 17 (step S16). As the display, for example, a vehicle figure is drawn on the display section 17 based on information of the color, the model, the year model, etc., of the other vehicle. More simply, the vehicle feature information may be displayed as only text. If the other vehicle search condition is not satisfied, the process returns to step S13 and again an information transmission request is transmitted to the other apparatus B and the processing described above is repeated.

Thus, the navigation apparatus in the first embodiment of the invention includes the input section 11 for inputting an other vehicle search condition and vehicle feature information of the own vehicle, the storage section 13 for storing the input search condition and vehicle feature information or received vehicle feature information and current position information, the transmission section 14 for transmitting an information transmission request from the own apparatus A to the other apparatus B or transmitting vehicle feature information and current position information from the other apparatus B to the own apparatus A, the current position acquisition section 12 for acquiring the current position of the own vehicle, the reception section 15 for receiving an information transmission request from the own apparatus A or receiving vehicle feature information and current position information from the other apparatus B, the control section 16 for making an other vehicle determination based on the other vehicle search condition set in the input section 11, the current position information of the own vehicle acquired in the current position acquisition section 12, and the vehicle feature information and current position information of the other vehicle received in the reception section 15, and the display section 17, if it is determined that the fitted other vehicle exists in the other vehicle determination, for displaying the vehicle feature information of the fitted other vehicle, so that not only the current position of the other vehicle, but also the feature information of the other vehicle can be acquired and if the other vehicle and a plurality of general vehicles mix at the same point, the user can easily recognize the target other vehicle.

In the first embodiment described above, a request for transmitting the vehicle feature information, etc., is sent from the own apparatus A to the other apparatus B, but the navigation apparatus A and B have the same configuration and thus either apparatus may become the own apparatus A or the other apparatus B. Therefore, in the example described above, an information transmission request of the vehicle feature information, etc., may be sent from the other apparatus B to the own apparatus A.

### (Second embodiment)

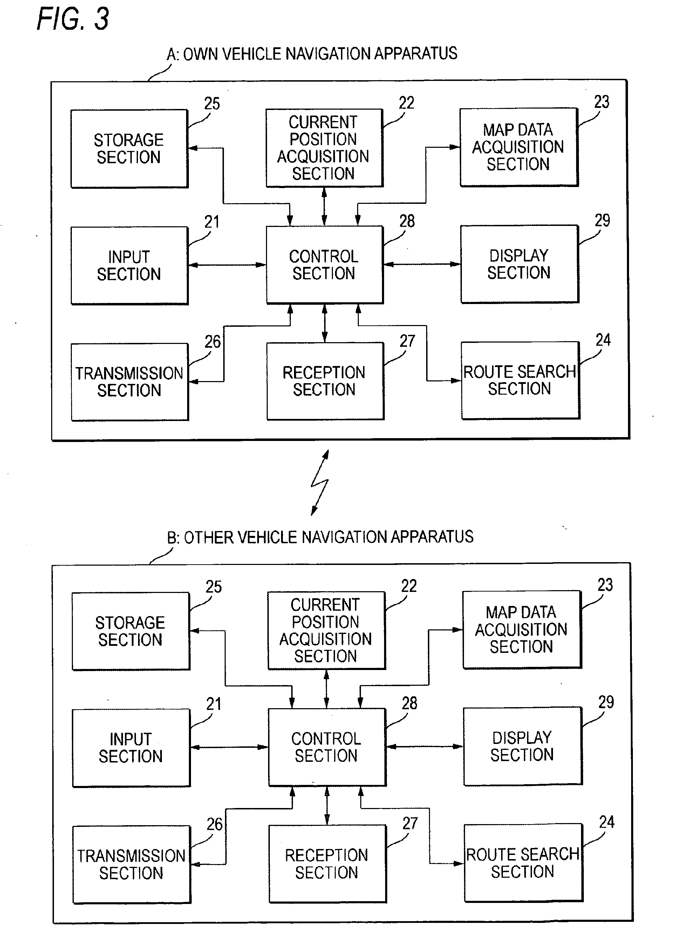

Next, a navigation system of a second embodiment of the invention will be discussed with FIG. 3. In the first embodiment described above, a search is made for the other vehicle existing within a predetermined distance from the own vehicle by way of example; in the second embodiment, it is assumed that a search is made for other vehicle running on the same route as the own vehicle. In FIG. 3, an own apparatus A and the other apparatus B include each an input section 21 for inputting a destination and vehicle feature information, etc., of the own vehicle, a current position acquisition section 22 for acquiring the current position of the own vehicle, a map data acquisition section 23 for acquiring the map data corresponding to the current position, a route search section 24 for searching for a recommended route from the current location of the own vehicle to the destination, a storage section 25 for storing the destination, the vehicle feature information, the current position information, the search route information, etc., a transmission section 26 for transmitting an information transmission request from the own apparatus A to the other apparatus B or transmitting vehicle feature information, current position information, search route information, etc., to the own apparatus A, a reception section 27 for receiving an information transmission request from the own apparatus A or receiving vehicle feature information, current position information, search route information, etc., from the other apparatus B, a control section 28 for making the other vehicle determination based on the current position information of the own vehicle acquired in the current position acquisition section 22, the search route information of the own vehicle found in the route search section 24, and the vehicle feature information, the current position information, and the search route information of the other vehicle received in the reception section 15 and if it is determined that a other vehicle running on the same route as the own vehicle exists in the other vehicle determination, for calculating the distance to the other vehicle, and a display section 29 for displaying the distance to the other vehicle and the vehicle feature information of the other vehicle.

The map data acquisition section 23 is a reader for reading map data, facilities data, etc., recorded on a record medium such as a DVD or a memory card. The read map data and facilities data are once stored in the storage section 25 and are processed by an image processor not shown and are displayed on the display section 29. The current position data acquired by the current position acquisition section 22 is displayed on the map road displayed on the display section 29. The route search section 24 is a program for searching for a recommended route from the current location acquired by the current position acquisition section 22 to the destination input through the input section 21, and the found route is superposed on the map road displayed on the display section 29.

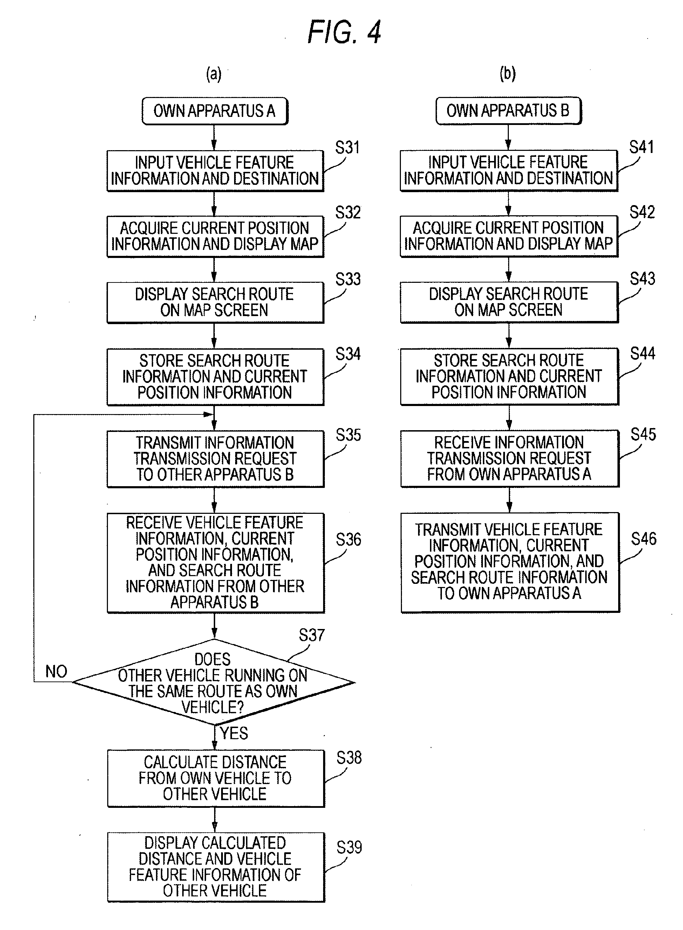

The operation of the described navigation apparatus will be discussed with reference to a flowchart of the own apparatus A of FIG. 4 (a) and a flowchart of the other apparatus B of FIG. 4 (b). The basic operation of the own apparatus A for obtaining the vehicle feature information of the other vehicle from the other apparatus B is similar to that in the first embodiment. First, in the other apparatus B, the vehicle feature information of the vehicle color, the shape, the vehicle model, etc., of the own vehicle and the destination are previously input from the input section 21, and the input vehicle feature information and destination are stored in the storage section 25 (step S41). The control section 28 acquires the map data containing the current position from the map data acquisition section 23 based on the current position data acquired from the current position acquisition section 22 and displays the map data on the display section 29 (step S42). The route search section 24 searches for an optimum route from the current location to the destination and displays the route on the map screen of the display section 29 (step S43), and the control section 28 stores search route information and ever-changing current position information in the storage section 25 (step S44). Likewise in the own apparatus A, the vehicle feature information of the own vehicle and the destination are input from the input section 21 and are stored (step S31), the control section 28 displays the map containing the current position on the display section 29 (step S32), the route search section 24 searches for a route from the current location to the destination and displays the route (step S33), and search route information and ever-changing current position information are stored in the storage section 25 (step S34).

The own apparatus A transmits an information transmission request to the other apparatus B (step S35). Upon reception of the information transmission request in the other apparatus B (step S45), the other apparatus B transmits the vehicle feature information, the current position information, and the search route information stored in the storage section 25 to the own apparatus A (step S46). When the reception section 27 of the own apparatus A receives the vehicle feature information, the current position information, and the search route information from the other apparatus B (step S36), the control section 28 compares the search route information and the current position information of the other apparatus B with the search route information and the current position information of the own apparatus A and checks whether or not the other vehicle running on the same route as the own vehicle exists (step S37). If the other vehicle exists, the control section 28 calculates the distance from the own vehicle position to the other vehicle position (step S38) and displays the distance and the vehicle feature information of the other vehicle on the display section 29 (step S39). As the display, for example, a vehicle figure drawn based on information of the color, the model, the year model, etc., of the other vehicle is displayed at the position of the other vehicle displayed on the display section 29. More simply, the vehicle feature information and the distance may be displayed as only text. If the other vehicle does not exist on the same route as the own vehicle, the process returns to step S35 and an information transmission request is transmitted to the other apparatus B and the processing described above is repeated.

Thus, the navigation apparatus in the second embodiment of the invention includes the input section 21 for inputting a destination and vehicle feature information, etc., of the own vehicle, the current position acquisition section 22 for acquiring the current position of the own vehicle, the map data acquisition section 23 for acquiring the map data corresponding to the current position, the route search section 24 for searching for a recommended route from the current location of the own vehicle to the destination, the storage section 25 for storing the destination, the vehicle feature information, the current position information, the search route information, etc., the transmission section 26 for transmitting an information transmission request from the own apparatus A to the other apparatus B or transmitting vehicle feature information, current position information, search route information, etc., to the own apparatus A, the reception section 27 for receiving an information transmission request from the own apparatus A or receiving vehicle feature information, current position information, search route information, etc., from the other apparatus B, the control section 28 for making a other vehicle determination based on the current position information acquired in the current position acquisition section 22, the search route information found in the route search section 24, and the vehicle feature information, the current position information, and the search route information of the other vehicle received in the reception section 27 and if it is determined that the other vehicle running on the same route as the own vehicle exists in the other vehicle determination, for calculating the distance to the other vehicle, and the display section 29 for displaying the distance to the other vehicle and the vehicle feature information of the other vehicle, so that if other vehicles running on the same route as the own vehicle exist, the distance to the corresponding vehicle is calculated and the distance is displayed together with the vehicle feature information of the corresponding vehicle and thus the other vehicle and a plurality of general vehicles mix at the same point, the user can easily recognize the target other vehicle. If a plurality of other vehicles exist, the distance to each of the other vehicles can be grasped, so that the top and last other vehicles can be found out.

In the second embodiment described above, at step S37 in FIG. 4, other vehicle determination is applied to all other apparatus B transmitting the vehicle feature information, etc., but searching may be limited within a predetermined distance from the current position of the own vehicle (for example, a radius of 500 meters). At the time, only the other vehicles ahead of the own vehicle on the same route may be extracted from the detected other vehicles.

In the second embodiment described above, at step S38, the distance from the own vehicle to the other vehicle is calculated; however, as an easy method, only the vehicle feature information of the other vehicle found at step S37 may be displayed at step S39 without calculating the distance to the other vehicle.

### (Third embodiment)

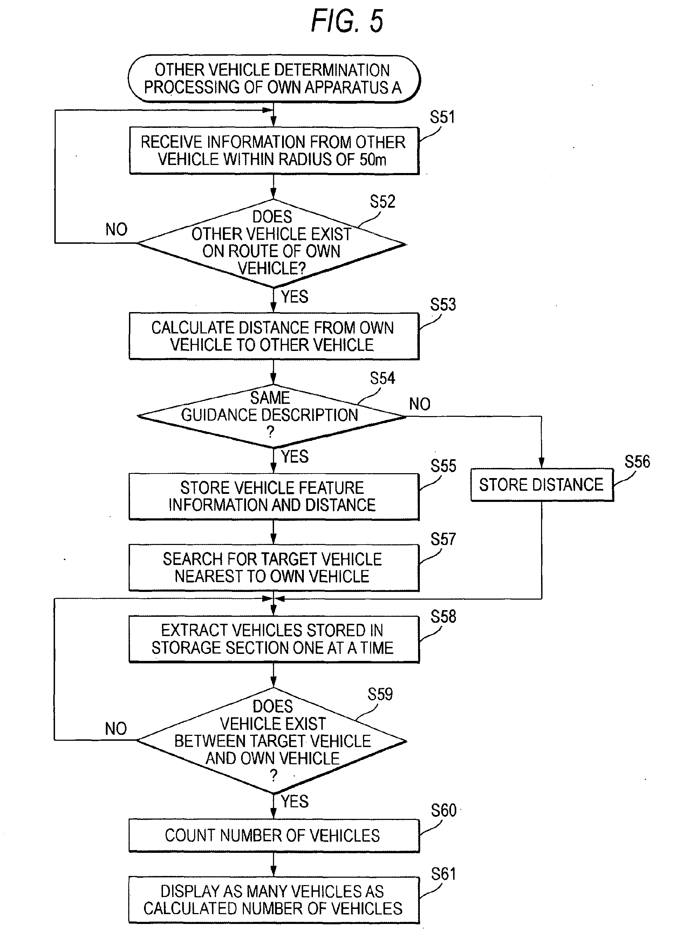

Next, a navigation system of a third embodiment of the invention will be discussed. A navigation apparatus in the third embodiment includes a configuration and operation similar to those of the navigation apparatus of the second embodiment shown in FIGS. 3 and 4 and differs from the navigation apparatus of the second embodiment only in other vehicle determination processing in own apparatus A and therefore only the other vehicle determination processing will be discussed with reference to FIG. 5. The third embodiment assumes that every running vehicle includes the apparatus.

First, a reception section 27 of own apparatus A receives vehicle feature information, current position information, and search route information transmitted from other apparatus B existing within a radius of 500 meters from the own vehicle and sends the received information to a control section 28 (step S51). The control section 28 determines whether or not a other vehicle exists on the search route of the own vehicle from the acquired information (step S52) and if the other vehicle exists, calculates the distance from the own vehicle to the other vehicle (step 53). Next, the control section 28 determines whether or not the other vehicle contains the same search route information as the own vehicle from the received search route information of the other vehicle, for example, whether or not the next guidance indicates turning the same intersection in the same direction (step S54). If the guidance descriptions are the same, the control section 28 recognizes the vehicle as the target vehicle and stores the vehicle feature information of the color, the year model, etc., of the vehicle and the distance to the vehicle in a storage section 25 (step S55). The control section 28 recognizes the vehicle different in guidance description as an unrelated non-target vehicle and stores only the distance to the vehicle in the storage section 25 (step S56). After performing the processing for all received information of the other vehicles, the control section 28 references the storage section 25 and makes a comparison between the stored distance from the own vehicle to one other vehicle and that to another, thereby searching for the target vehicle nearest to the own vehicle (step S57). Next, the control section 28 extracts all vehicles stored in the storage section 25 one at a time (step S58) and determines whether or not the vehicle exists between the target vehicle nearest to the own vehicle and the own vehicle (step S59) and if the vehicle exists therebetween, counts the vehicle as one and calculates the total number of vehicles existing between the target vehicle and the own vehicle (step S60). The calculated number of vehicles is sent to a display section 29, which then displays as many vehicles as the number of vehicles existing between the own vehicle and the target vehicle on the route (step S61).

Thus, according to the navigation apparatus in the third embodiment of the invention, if it is determined that a other vehicle running on the same route as the own vehicle exists in the other vehicle determination, whether or not the other vehicle contains the same search route information as the own vehicle is determined and if it is determined that the other vehicle contains the same search route information, the other vehicle is recognized as the target vehicle, so that the target vehicle can be easily found out. If a plurality of target vehicles exist, a comparison is made between the distance to one target vehicle and that to another, whereby the target vehicle nearest to the own vehicle can be detected. Further, if it is determined that the other vehicle does not contain the same search route information as the own vehicle, the distance to the other vehicle is stored and how many other vehicles exist between the own vehicle and the target vehicle is calculated and as many vehicles as the count are displayed, so that the number of vehicles ahead of the own vehicle to the target vehicle can be recognized easily.

In the third embodiment, whether or not the other vehicle contains the same search route information as the own vehicle is determined as whether or not the next guidance indicates turning the same intersection in the same direction is determined, but may be determined as whether or not the destinations are the same or whether or not the vehicles go by way of the same point is determined.
While the invention has been described in detail with reference to the specific embodiments, it will be obvious to those skilled in the art that various changes and modifications can be made without departing from the spirit and the scope of the invention.
The present application is based on Japanese Patent Application No. 2004-033813 filed on February 10, 2004, which is incorporated herein by reference.

### Industrial Applicability

As described above, the navigation apparatus according to the invention receives the vehicle feature information in addition to the current position information from the other vehicle and thus can acquire not only the current position of the other vehicle, but also the information indicating how the other vehicle seems to be and if the target other vehicle and a plurality of general vehicles mix at the same point, the user can easily find out the target other vehicle from among them; the navigation apparatus according to the invention is useful as a navigation apparatus, etc., for acquiring the position of a other vehicle by conducting communications with the other vehicle.

## Claims

1. A navigation apparatus comprising:
an input unit that inputs an other vehicle search condition;
a current position acquisition unit that acquires a current position of own vehicle;
a reception unit that receives vehicle feature information and current position information transmitted from the other vehicle;
a control unit that performs other vehicle determination as to whether a search target other vehicle exists or not based on the other vehicle search condition set in the input unit, the current position information of the own vehicle acquired in the current position acquisition unit, and the current position information of the other vehicle received in the reception unit; and
a display unit that displays the vehicle feature information of the other vehicle when it is determined that the search target other vehicle exists in the other vehicle determination.

2. The navigation apparatus as set forth in claim 1, wherein the other vehicle search condition is the other vehicle existing within a predetermined distance range from the current position of the own vehicle.

3. A navigation apparatus comprising:
a route search unit that searches for a route to a destination;
a current position acquisition unit that acquires a current position of own vehicle;
a reception unit that receives vehicle feature information, current position information, and search route information transmitted from other vehicle;
a control unit that performs other vehicle determination as to whether other vehicle running on the same route as the own vehicle exists or not based on the search route information of the own vehicle searched in the route search unit, the current position information of the own vehicle acquired in the current position acquisition unit, and the search route information and the current position information of the other vehicle received in the reception unit; and
a display unit that displays the vehicle feature information of the other vehicle when it is determined that the other vehicle running on the same route as the own vehicle exists in the other vehicle determination.

4. The navigation apparatus as set forth in claim 3, wherein the control unit searches for the other vehicle existing within a predetermined distance range from the current position of the own vehicle in the other vehicle determination.

5. The navigation apparatus as set forth in claim 3 or 4, wherein when it is determined that the other vehicle running on the same route as the own vehicle exists in the other vehicle determination, the control unit calculates the distance between the other vehicle and the own vehicle and displays the distance on the display unit.

6. The navigation apparatus as set forth in any of claims 3 to 5, wherein when it is determined that the other vehicle running on the same route as the own vehicle exists in the other vehicle determination, the control unit determines whether the other vehicle has the same search route information as the own vehicle or not; and
wherein when the control unit determines that the other vehicle has the same search route information, the control unit recognizes the other vehicle as a target vehicle.

7. The navigation apparatus as set forth in claim 6, wherein when the control unit determines that the other vehicle does not have the same search route information as the own vehicle, the control unit stores the distance to the other vehicle and calculates how many other vehicles exist between the own vehicle and the target vehicle for display.

8. The navigation apparatus as set forth in any of claims 1 to 7, wherein the vehicle feature information includes at least one of a vehicle color, a vehicle model, a vehicle size, a model year, and an exterior part.
